# EUROPÄISCHE PATENTSCHRIFT

(11) **EP 2 136 913 B1**
(45) Veröffentlichungstag und Bekanntmachung des Hinweises auf die Patenterteilung: **25.04.2018**
(21) Anmeldenummer: 08717868.7
(22) Anmeldetag: 14.03.2008
(51) Int. Cl.: B01J 20/34, B01D 41/02, C12H 1/04

(54) **VERFAHREN ZUR REGENERIERUNG EINES FILTERHILFSMITTELS**
METHOD FOR REGENERATING A FILTER AID
PROCÉDÉ POUR RÉGÉNÉRER UN ADJUVANT DE FILTRATION

(30) Priorität: 15.03.2007 EP 07104260
(43) Veröffentlichungstag der Anmeldung: 30.12.2009
(73) Patentinhaber: BASF SE, 67056 Ludwigshafen am Rhein (DE)
(72) Erfinder: MEFFERT, Helmut, 67273 Bobenheim am Berg (DE); PIEROBON, Marianna, 67063 Ludwigshafen (DE); PETSCH, Tobias, 55758 Mörschied (DE); BRODERSEN, Julia, 68163 Mannheim (DE); FEISE, Hermann Josef, 67259 Kleinniedesheim (DE); ERK, Ates, 76131 Karlsruhe (DE); KRESS, Jörg, 68239 Mannheim (DE); MAR, Ralf, 67691 Hochspeyer (DE); LACHMUTH, Ralf, 67273 Bobenheim am Berg (DE); BAYER, Robert, 74889 Sinsheim (DE)
(74) Vertreter: BASF IP Association
(86) Internationale Anmeldenummer: PCT/EP2008/053129
(87) Internationale Veröffentlichungsnummer: WO 2008/110632

(56) Entgegenhaltungen:
- WO-A-2008/037777
- DE-A1- 19 625 481
- US-A- 5 801 051
- US-A- 6 117 459

## Beschreibung

Die vorliegende Erfindung betrifft ein Verfahren zur Regenerierung von Filterhilfsmitteln, welche entweder aus anorganischen, natürlichen oder halbsynthetischen Filterhilfsmitteln, vorzugsweise Kieselgur, Perlit, Aluminiumoxid, Glas, Pflanzengranulate, Holzfasern und/oder Zellulose, bestehen durch Behandlung mit wässriger Lauge und unter Einsatz von Enzymen und Tensiden.
Als Filterhilfsmittel werden Zusatzstoffe verstanden, die bei Fest-Flüssig-Trennprozessen eingesetzt werden, um durch Bildung einer porösen Voranschwemmschicht auf dem eigentlichen Filtermedium und/oder durch Einbindung in das Filterkuchengerüst eine Abscheidung der Feststoffe bei gleichzeitig ausreichender Durchströmbarkeit des entstehenden Filterkuchens zu gewährleisten.
Als Filterhilfsmittel werden sowohl anorganische Substanzen wie beispielsweise Kieselgur, Perlit oder Aluminiumoxide, als auch synthetische Polymere eingesetzt. Welche Filterhilfsmittel im Einzelnen verwandt werden, richtet sich auch nach dem Anwendungsgebiet. Als halbsynthetische Filterhilfsstoffe im Sinne der Erfindung werden modifizierte natürliche Stoffe bezeichnet, welche chemisch oder physikalisch in ihren Eigenschaften verändert wurden wie beispielsweise modifizierte Zellulose. Bei der Filtration von Bier ist Kieselgur eines der am häufigsten verwendeten Filterhilfsmittel.
Aus wirtschaftlichen Gründen ist es vorteilhaft, wenn das Filterhilfsmittel regenerierbar ist. Besonders vorteilhaft ist eine Regenerierung über mehrere Filtrations-Regenerations-Zyklen.
In der WO 02/32544 werden Co-Extrudate aus Polystyrol und wasserunlöslichem Polyvinylpyrrolidon und deren Verwendung als regenerierbare Filterhilfsmittel beschrieben, wobei jedoch die Regenerierbarkeit nur ganz allgemein erwähnt wird.
In der WO 03/084639 werden Co-Extrudate aus thermoplastischen Polymeren, außer Polystyrol, und wasserunlöslichem Polyvinylpyrrolidon und deren Verwendung als regenerierbare Filterhilfsmittel beschrieben, wobei jedoch die Regenerierbarkeit nur ganz allgemein erwähnt wird.
In der WO 92/11085 werden Filterhilfsmittel auf Basis von Agglomeraten aus vernetztem Polyvinylpyrrolidon und faserförmigen thermoplastischen Polymeren wie beispielsweise Polyethylenen oder Polyamiden und deren Verwendung als Filterhilfsmittel beschrieben. Es wird ganz allgemein darauf hingewiesen, dass die Filterhilfsmittel regenerierbar seien.

Aus der EP 611 249 ist ein Verfahren zur Regenerierung eines Filterhilfsmittels durch Zusatz von Enzymen und Natronlauge beschrieben.
In der EP 253 233 ist die Regenerierung von Kieselgur lediglich mittels Natronlauge beschrieben wodurch die Polysaccharide der Mikroorganismen (beta-Glucane) nicht zerstört werden.
In der DE 196 25 481 ist die Regenerierung von Kieselgur in Gegenwart einer Mischung von nichtionischen und anionischen Tensiden und proteolytischen Enzymen beschrieben.
In der DE 196 52 499 ist die Regenerierung von Filterhilfsmitteln beschrieben, wobei die Filterhilfsmittel von den Filterelementen entfernt und in einem separaten Behälter mit Enzymlösungen, schwachen Alkalien und schwachen Säuren sowie mit einem Oxidationsmittel behandelt werden.
In der WO 03/008067 ist die Regenerierung von Filterhilfsmitteln beschrieben, wobei am intakten Filterkuchen zunächst eine Spülung mit Lauge und anschließend ebenfalls am intakten Filterkuchen eine Neutralisierung des pH durch Spülung mit Säure erfolgt.
Aus der WO 96/35497 ist die Regenerierung von Filterhilfsmitteln aus synthetischen Polymeren wie Polyamid-Filterhilfsmittel durch Waschen mit Lauge und Waschen mit einer enzymatischen Verbindung bekannt, wobei die Behandlung in situ in der Filteranlage am intakten Filterkuchen erfolgt.
Die EP 525 166 beschreibt die Behandlung des suspendierten Filterhilfsmittels mittels einer Kombination von Enzymen und mindestens eines Tensides.Die WO 99/16531 offenbart eine Laugenbehandlung eines suspendierten Perlitkuchens mit anschliessender Neutralisation am re-angeschwemmten Filterhilfsmittel.
In der EP 879 629 wird eine Laugenbehandlung eines suspendierten Filterhilfsmittels beschrieben und gegebenenfalls eine Enzymbehandlung.

In GTM 3/2006 (Verfahrenstechnik Filtration, Seite 44-46) wird eine Regeneration von Kieselgur mittels NaOH und Salpetersäure, mittels Enzymen (beta-Glucanase, Protease) oder einer Kombination der beiden Verfahren beschrieben wobei 70 % Kieselgur wiederverwendet werden konnten. US 6117459 offenbart ein Filterhilfsmittel und ein Verfahren zur Regeneration. Das Filterhilfsmittel umfasst nicht-komprimierbare synthetische oder natürliche Polymerpartikel oder nicht-komprimierbare natürliche Partikel, wie beispielsweise verschiedene synthetische Polymere und Derivate von Silica sowie Mischungen aus Polymeren und Silica und dessen Derivaten.

Das Regenerationsverfahren des Filterhilfsmittels in US 6117459 setzt keinerlei Tensid ein sondern basiert rein auf der Waschung bei hohem pH-Wert mittels Sodalösung sowie die Behandlung mittels Enzym. Es hat sich jedoch gezeigt, dass die bisher bekannten Regenerierungsverfahren für die erfindungsgemäß zu behandelnden Filterhilfsmittel keine befriedigenden Ergebnisse liefern. Je nach Regenerationsprozedur ist eine nahezu vollständige Verwendung des Filterhilfsmittels über mehrere Filtrations-Regenerations-Zyklen hinaus nicht möglich. Zum Erreichen von mehreren Zyklen muss derzeit pro Zyklus etwa 30 Gew.% frisches Filterhilfsmittel zugegeben werden (Verfahrenstechnik Filtration, Seite 44-46).

Die guten Filtrationseigenschaften des frischen Filterhilfsmittels hinsichtlich des Druckanstiegs während der Filtration sowie hinsichtlich der Filter- und Waschwiderstände bleiben im Fall der Regenerate nicht über mehrere Zyklen erhalten, sondern verschlechtern sich von Zyklus zu Zyklus bis der weitere Gebrauch schließlich unmöglich wird.
Üblicherweise werden Filterwiderstände und Waschwiderstände, die in Abhängigkeit des technischen Anwendungsgebiets und des Filterhilfsmittels einen bestimmten Wert übersteigen, in der Praxis als nicht akzeptabel angesehen, da ansonsten zu hohe Druckanstiegsraten während der Bierfiltration auftreten, was unwirtschaftlich kurze Filtrationszeiten zur Folge hat.
Als Filterwiderstand bezeichnet man das Produkt aus Fluidviskosität und Durchströmungswiderstand während des Filterkuchenaufbaus, als Waschwiderstand das Produkt aus Fluidviskosität und Durchströmungswiderstand bei der Durchströmung des bereits gebildeten Filterkuchens. Die Bestimmung der entsprechenden Messwerte ist dem Fachmann bekannt und ist in der VDI-Richtlinie 2762 beschrieben.
Aufgabe der Erfindung war es, ein Verfahren zur Regenerierung eines anorganischen, natürlichen oder halbsynthetischen Filterhilfsmittels zu entwickeln, welches den mehrmaligen Einsatz des Filterhilfsmittels bei wirtschaftlichen Werten von Filtratdurchsatz und Filterstandzeit sowie ausreichender Klärwirkung ermöglicht sowie die Bereitstellung eines derartigen Regenerats.
Diese Aufgabe wird gelöst durch ein Verfahren zur Regenerierung eines anorganischen, natürlichen oder halbsynthetischen Filterhilfsmittels, dadurch gekennzeichnet, dass man das Filterhilfsmittel zunächst einer Behandlung mit wässriger Lauge unterwirft, anschließend eine Behandlung mit einer Enzymlösung vornimmt, daran anschließend eine Behandlung mit einem Tensid und eine zweite Behandlung mit wässriger Lauge durchführt, wobei die letzten beiden Schritte gleichzeitig erfolgen. Mit Hilfe des erfindungsgemäßen Verfahrens ist eine erfolgreiche Regenerierung des Filterhilfsmittels über mehrere Filtrations-Regenerations-Zyklen möglich, wobei gute Filtrationseigenschaften des Filterhilfsmittels hinsichtlich Druckanstieg während der Filtration sowie der Filter- und Waschwiderstände im Regenerat erhalten bleiben, ohne dass hierfür notwendigerweise frisches Filterhilfsmittel zugegeben werden muss.

Das erfindungsgemäße Verfahren eignet sich zur Regenerierung von Filterhilfsmitteln für jegliche Art von Anschwemmfiltern mit einer auf Filterelementen abgelagerten Anschwemmschicht und/oder kontinuierlicher Zugabe des Filterhilfsmittels zur zu trennenden Suspension.
Das erfindungsgemäße Regenerierungsverfahren eignet sich insbesondere für den Einsatz in der Bierfiltration. Das Regenerationsverfahren entfernt bevorzugt abfiltrierte Verunreinigungen, die insbesondere aus Hefen bestehen, von Filterhilfsstoffen.
Als Filteranlage wird erfindungsgemäß der Filtrationsapparat selbst, d.h. beispielsweise im Falle eines Druckfilters der druckfeste Behälter und das darin befindliche Filterelement, bezeichnet, in dem die Filtration stattfindet. Als Filterelemente können alle dafür bekannten Vorrichtungen wie beispielsweise Filterkerzen oder Scheibenfilterelemente vorhanden sein.
Das erfindungsgemäße Regenerierungsverfahren eignet sich bevorzugt für einzelne Filterhilfsmittel wie Kieselgur, Perlit, Aluminiumoxid, Glas, Pflanzengranulate, Holzfasern und/oder Zellulose oder Mischungen hiervon.
Kieselgur ist eine pulverförmige Substanz, die hauptsächlich aus den Siliziumdioxidschalen fossiler Kieselalgen (Diatomeen) besteht, die eine sehr poröse Struktur aufweisen. Kommerziell kann Kieselgur beispielsweise von den Firmen Lehmann und Voss (z.B. Celite®), Dicalite oder PallSeitzSchenk bezogen werden.
Perlit-Filterhilfsmittel bestehen aus vulkanischem Obsidiangestein und werden durch thermische Expansion hergestellt. Chemisch handelt es sich um Aluminiumsilikat, das annähernd so inert ist wie Kieselsäure. In ihrer Struktur entsprechen Perlit-Filterhilfsmittel Kugelfragmenten, die nicht die gleiche Porosität besitzen, wie dieses bei dem filigranen Skelett der Diatomeen der Fall ist. Kommerziell kann Perlit beispielsweise von den Firmen Lehmann und Voss (Harbolite®) und Dicalite bezogen werden.
Vorkonditionierte Naturfasern aus extraktfreier Zellulose, die zum Teil speziell aufbereitet werden, um hohe Reinheiten sowie Geruchs- und Geschmacksneutralität zu gewährleisten, können ebenfalls als Filterhilfsmittel eingesetzt. Zellulosefilterhilfsmittel sind mechanisch und chemisch sehr stabil, unlöslich in fast allen Medien und nahezu pH-neutral. Kommerziell werden sie z.B. von der Firma J. Rettenmaier & Söhne vertrieben (z.B. Arbocel®-, Filtracel®- und Vitacel®-Typen).
Die oben genannten Materialien werden für die Anwendung als Filterhilfsmittel üblicherweise durch Mahl- und Sortierprozesse aufgrund der Größe auf bestimmte Korngrößenspektren eingestellt. Es können auch Mischungen aus Fraktionen mit unterschiedlichen Korngrößenverteilungen eingesetzt werden.

Das erfindungsgemäße Verfahren wird so ausgeführt, dass das mit, insbesondere aus den Bierhefen stammenden, Verunreinigungen beladene Filterhilfsmittel zunächst einer Behandlung mit einer wässrigen Lauge unterworfen wird. Als wässrige Laugen eignen sich vor allem Natronlauge oder Kalilauge, besonders bevorzugt Natronlauge. Die Konzentration der Lauge beträgt üblicherweise 0,5 bis 5 Gew.-% Feststoff Base/I, insbesondere 1 bis 5 Gew.-%, besonders bevorzugt 2 bis 3.5 Gew.-%. Die Behandlungszeit liegt üblicherweise zwischen 15 und 180 Minuten, bevorzugt zwischen 45 und 120 Minuten.
Im Anschluss an die Behandlung mit einer wässrigen Lauge erfolgt eine enzymatische Behandlung des Filterhilfsmittels. Vorteilhafterweise wird zwischen dem ersten Behandlungsschritt mit einer Lauge und der enzymatischen Behandlung ein Waschschritt mit kaltem oder heißem Wasser vorgenommen.

Vor der Behandlung mit einem Enzym wird der pH-Wert üblicherweise auf Werte < pH 7 eingestellt, vorzugsweise auf pH 3,5 bis 5,5. Die Einstellung des pH-Werts kann mit verschiedenen Säuren, beispielsweise mit Mineralsäuren wie Phosphorsäure, Salpetersäure, Schwefelsäure oder, im Falle von gläsernen Apparaturen, auch mit Salzsäure erfolgen. Weiterhin eignen sich auch Zitronensäure, Kohlensäure oder Milchsäure. Grundsätzlich eignen sich als Enzyme alle Enzyme oder Enzymmischungen, welche die bei der Filtration abgetrennten biologischen Materialien, insbesondere Hefezellen wie beispielsweise Bierhefen, lysieren können, vorzugsweise handelt es sich dabei um Proteasen, Glucosidasen, Amylasen oder Pektinasen. Solche Enzyme bzw. Enzymmischungen sind kommerziell erhältlich.
Als Enzyme eignen sich bevorzugt Glucanasen, besonders bevorzugt β-1,3-Glucanasen. Die Enzyme kommen üblicherweise in Form wässriger Lösungen zur Anwendung. Die geeignete Menge Enzym richtet sich nach der Aktivität des jeweiligen Enzyms und der Beladung des Unfiltrats und des Filterkuchens mit Verunreinigungen. Neben einer beta-Glucanase Aktivität können auch weitere Enzymaktivitäten in der erfindungsgemäßen Enzymlösung vorhanden sein.
Die Ermittlung der Aktivität der Enzymlösung kann der Fachmann durch einige einfache Versuche vornehmen, indem er untersucht, welche Menge an Enzym er benötigt, um eine definierte Zahl von Hefezellen zu lysieren. Sodann kann die Dosierung des Enzyms in Abhängigkeit von der Trübung oder Beladung mit Hefezellen und des zu filtrierenden Volumens des Unfiltrats erfolgen.
Die Enzymbehandlung kann bei 25 - 60 °C, vorzugsweise 40 - 50 °C erfolgen. Die Dauer liegt üblicherweise zwischen 30 und 300 min., bevorzugt zwischen 100 und 180 min.

Die Bestimmung von aktiven Einheiten kann wie im folgenden geschildert erfolgen: Eine aktive Einheit U (Unit) ist erfindungsgemäß definiert als die Abnahme der Extinktion bei 800 nm um 0.04/min in einem Enzym-Assay bei pH 4,0 und 45 °C innerhalb der ersten 10 min. Als Substrat kann bei diesem Assay Brauereihefe mit 1 - 3.10⁷ Zellen/ml verwendet werden, die vorher mit Natronlauge behandelt wurde. Bezogen auf den EBC-Wert des Unfiltrats bei 25° und unter Bezug auf die wie oben beschriebenen aktiven Units empfiehlt sich eine Dosierung von 0,2 U/(EBC x hL) bis 12 U/(EBC x hL), vorzugsweise 1 bis 5 U/(EBC x hL) (EBC: European Brewery Convention; Standardtest zur Bestimmung der Trübungswerte).
In Bezug auf die Hefezellenzahl im zu regenerierenden Filterkuchen empfiehlt sich eine Dosierung von 3 bis 170 U/(10¹⁰ Hefezellen), vorzugsweise 5 bis 85 U/(10¹⁰ Hefezellen), insbesondere 5 bis 20 U/(10¹⁰ Hefezellen).
Weiterhin wird das Filterhilfsmittel mit einer wässrigen Tensidlösung oder Tensiddispersion behandelt. Die Konzentration an Tensid, bezogen auf das Gesamtgewicht der Lösung, kann 0,01 bis 4 Gew.-%, vorzugsweise 0,01 bis 1,5 Gew.-%, insbesondere 0,1 bis 0,75 Gew.-%, betragen.
Als Tenside eignen sich sowohl ionische, insbesondere anionische, wie auch nichtionische Tenside. Es können auch Mischungen von Tensiden eingesetzt werden. Geeignete ionische Tenside können sein: Fettalkoholsulfate wie Natriumdodecylsulfat oder Ammoniumdodecylsulfat, Fettalkoholethersulfate, Alkylsulfoacetate, Fettalkoholphosphorsäureester, Fettalkoholetherphosphate, Alkoholphosphorsäureester wie Trüsobutylphosphat, Monoalkyl- oder Dialkylester der Sulfobernsteinsäure wie Dioctylnatriumsulfosuccinat, Alkylsulfonate, Alkylbenzolsulfonate wie Dodecylbenzolsulfonsäure. Als nichtionische Tenside kommen in Betracht: Fettalkoholethoxylate wie beispielsweise ein C13-Fettalkohol mit 6 EO-Einheiten, Alkylphenolethoxylate, Polyoxyethylenfettsäureester, Polypropylenglykolethoxylate, Fettsäuremono- und -diglyceride sowie die entsprechenden -ethoxylate, Fettsäureglykolpartialester, Sorbitanfettsäureester oder Polyoxyethylensorbitanfettsäureester.
Zwischen der enzymatischen Behandlung und der Tensidbehandlung kann gewünschtenfalls wiederum ein Waschschritt mit kaltem oder heißem Wasser erfolgen.
An den Behandlungsschritt mit einem Tensid kann sich ein weiterer Waschschritt mit kaltem oder heißen Wasser anschließen.

Die Behandlung mit dem Tensid erfolgt gleichzeitig mit dem zweiten Behandlungsschritt mit wässriger Lauge.

Der Tensidbehandlungsschritt und/oder der zweite Behandlungsschritt mit einer wässrigen Lauge kann wahlweise außerhalb der Filteranlage in einem geeigneten Behälter wie beispielsweise der Vorrichtung für die Enzymbehandlung oder, nach erneuter Anschwemmung des Filterhilfsmittels auf ein Filterelement, durch Durchströmung auf dem Filter erfolgen.
Der erste Behandlungsschritt mit wässriger Lauge kann gemäß einer Verfahrensvariante am intakten Filterkuchen erfolgen.
Gemäß einer anderen Verfahrensvariante kann die erste Behandlung mit wässriger Lauge auch an einem aus der Filteranlage entfernten Filterkuchen, dessen Partikelverband disintegriert ist, und der als wässrige Aufschlämmung oder Suspension vorliegt, vorgenommen werden.
Das erfindungsgemäße Verfahren wird gemäß einer Ausführungsform so durchgeführt, dass der Schritt der enzymatischen Behandlung nicht in situ an einem intakten Filterkuchen bzw. einer Anschwemmschicht erfolgt, sondern dass der Filterkuchen unter Zerstörung des Partikelverbundes vom Filtermedium entfernt und in einer separaten Vorrichtung, insbesondere außerhalb der Filteranlage, behandelt wird. Diese separate Vorrichtung kann beispielsweise ein Kessel oder jeder andere geeignete Behälter sein, und ist vorzugsweise mit einer Rührvorrichtung ausgestattet. Vor der enzymatischen Behandlung wird das Filterhilfsmittel dann unter Auflösung des Partikelverbands im Filterkuchen vom Filterelement entfernt, aus der Filtrationsanlage ausgebracht und in einer separaten Vorrichtung behandelt. Die enzymatische Behandlung erfolgt gemäss dieser Ausführungsform an einer wässrigen Suspension oder Aufschlämmung des Filterhilfsmittels, die üblicherweise einen Feststoffgehalt von 5 bis 25 Gew.-% aufweist.
Nach der enzymatischen Behandlung kann die Behandlung mit einem Tensid ebenfalls an der wässrigen Aufschlämmung oder Suspension des Filterhilfsmittels erfolgen. Im Anschluss daran kann der zweite Behandlungsschritt mit wässriger Lauge entweder weiterhin an der Suspension oder wässrigen Aufschlämmung erfolgen oder alternativ an einem wiederangeschwemmten Filterkuchen.

Gemäß einer anderen Verfahrensvariante wird das Filterhilfsmittel in einem geeigneten Filter angeschwemmt und der neu gebildete Filterkuchen den weiteren Behandlungsschritten, der Tensidbehandlung sowie der zweiten Laugenbehandlung, unterzogen.

Gemäß einer alternativen Ausführungsform wird die enzymatische Behandlung am intakten Filterkuchen durchgeführt, indem der Filterkuchen mit der wässrigen Enzymlösung entweder durchspült oder mit der Enzymlösung versetzt und inkubiert wird. Bevorzugt wird der Filterkuchen kontinuierlich mit der Enzymlösung durchspült, um seine Stabilität zu gewährleisten und ein Abfallen vom Filterelement zu verhindern.
Gemäß dieser alternativen Ausführungsform wird die Behandlung mit dem Tensid sowie der zweite Behandlungsschritt mit wässriger Lauge, gewünschtenfalls jeweils nach einem Waschschritt, am intakten Filterkuchen durchgeführt.
Es ist auch möglich den Filterkuchen nach der Enzymbehandlung zu zerstören und die Tensidbehandlung und/oder die zweite Laugenbehandlung in einer Suspension oder wässrigen Aufschlämmung vorzunehmen.
Die Regenerierungsschritte, die am intakten Filterkuchen vorgenommen werden, können bei sämtlichen Druckdifferenzen zwischen Zulauf- und Filtratseite des Filters durchgeführt werden, die einerseits eine Filterkuchendurchströmung ermöglichen und andererseits die Druckfestigkeit des Filtergehäuses nicht überschreiten. Üblicherweise liegt diese Druckdifferenz zwischen 1 kPa und 800 kPa.
Die enzymatische Behandlung, sowie gegebenenfalls der erste und/oder der zweite Behandlungsschritt mit einer Lauge sowie die Tensidbehandlung in der separaten Vorrichtung erfolgen üblicherweise bei Atmosphärendruck. Es ist auch denkbar, dass mindestens einer der Schritte bei Überdruck durchgeführt wird.

Die Temperatur der für die Regenerierung eingesetzten wässrigen Laugen ebenso wie die der wässrigen Tenside kann 5 bis 95 °C betragen.

Grundsätzlich können die am durchströmten intakten Filterkuchen durchgeführten Verfahrensschritte jeweils unabhängig voneinander entweder in einer Kreislauffahrweise unter Wiederverwendung der Flüssigkeit erfolgen oder die Flüssigkeiten werden unmittelbar verworfen.

Gemäss einer Ausführungsform wird bei der ersten Behandlung mit wässriger Lauge die Lösung, vorzugsweise vollständig, verworfen. Es ist auch denkbar, dass die wässrige Lauge zumindest teilweise, vorzugsweise gereinigt, wieder verwendet wird und in Kreislauffahrweise verwendet wird. Die Wiederverwendung der Lauge kann aus wirtschaftlichen und Entsorgungsaspekten sinnvoll sein.

Bevorzugt wird bei den einzelnen Waschschritten unabhängig voneinander das Waschwasser, vorzugsweise vollständig, verworfen. Es ist auch denkbar, dass das, insbesondere heisse, Waschwasser zumindest teilweise, vorzugsweise gereinigt, wieder verwendet wird und in Kreislauffahrweise eingesetzt wird. Die Wiederverwendung oder Aufbereitung des insbesondere heissen Waschwassers ist aus abwassertechnischen sowie energetischen Aspekten sinnvoll.

Die Enzymbehandlung, Tensidbehandlung sowie die zweite Behandlung mit wässriger Lauge erfolgen jeweils mit Vorteil unabhängig voneinander zumindest teilweise in Kreislauffahrweise, um die teuren Wirkstoffe wie Enzyme oder Tenside erstens möglichst lange zu verwenden und zweiten möglichst wenig Abwasser zu produzieren. Die Kreislauffahrweise dieser Wirkstofflösungen hat weiterhin den Vorteil, dass Sie nicht jeweils auf eine entsprechende Temperatur erwärmt werden müssen und somit keine ständige hohe Energiezufuhr notwendig ist. Es ist auch denkbar, dass die wässrigen Lösungen an Enzym, Lauge und/oder Tensid insbesondere zu Anfang des jeweiligen Schrittes direkt verworfen werden. Dies ist insbesondere dann denkbar wenn entsprechende Enzyme wesentlich wirtschaftlicher produziert werden können oder die Enzyme bei tieferen Temperaturen eine ausreichende Aktivität aufweisen.

Das vollständig regenerierte Filterhilfsmittel kann in der Filteranlage verbleiben und sofort für die Filtration eingesetzt werden. Man kann das regenerierte Filterhilfsmittel auch aus der Anlage entfernen und nach Trocknung lagern.

Der Fachmann kann, je nach Biersorte, Trübung und Hefefracht des Unfiltrats, frisches Filterhilfsmittel zur Voranschwemmung oder Dosage zugeben, beispielsweise mit einer anderen Körnung, um auf geänderte Feststoffeigenschaften zu reagieren. Je nach Filtrations- und Regenerationsvorrichtung kann es zu anlagenbedingten Verlusten an Filterhilfsmittel, insbesondere durch Undichtigkeiten, Durchbrüche während der Waschschritte oder mechanische Zerstörung des Filterhilfsmittels während der Regenerationsschritte, kommen, welches wieder zugegeben werden muss, um eine entsprechende Laufzeit des nachfolgenden Filtrationszyklus zu gewährleisten. Dabei kann entweder neues oder bereits regeneriertes, insbesondere getrocknetes, Filterhilfsmittel von außen zugeführt werden.

Bei dem erfindungsgemäßen Verfahren können 0 bis 20 Gew.%, vorzugsweise 0 bis 10 Gew.-%, insbesondere 0 bis 5 Gew.-%, Filterhilfsmittel pro Zyklus ausgetauscht und/oder ergänzt werden. Dies kann nicht aufgrund einer unzureichenden Reinigung als vielmehr durch Verluste an Filterhilfsmittel in der Filter- und Regenerierungs-Anlage erforderlich sein. In einer besonderen Ausführungsform wird kein Filterhilfsmittel während insgesamt mindestens 5, vorzugsweise mindestens 10, Regenerationszyklen von außen zugeführt.
Ein wichtiges Beurteilungsmerkmal für die Qualität der Regenerierung ist der zeitliche Druckanstieg, d.h. die Druckdifferenz zwischen Zulauf- und Filtratseite des Filters, bei der auf die Regeneration folgenden Bierfiltration. Ein zu hoher Druckanstieg oder ein Anwachsen der Druckanstiegsrate von Zyklus zu Zyklus deuten auf eine unvollständige Regeneration des Filterhilfsmittels hin. Eine näherungsweise konstante Druckanstiegsrate von Zyklus zu Zyklus, die im Bereich derjenigen des Frischprodukts liegt, deutet auf eine ausreichende Regeneration hin. Die Trübungsfracht im Unfiltrat schwankt üblicherweise und hat einen beträchtlichen Einfluss auf die Druckanstiegsrate. Dieser Einfluss kann näherungsweise durch Normierung der Druckdifferenz mit Hilfe der jeweiligen, ebenfalls auf einen Standardwert normierten, Unfiltrattrübung (gemessen als 25°-EBC) eliminiert werden.
Ein weiteres, wichtiges Beurteilungskriterium für den Regenerationserfolg ist der Filter- bzw. der Waschwiderstand des Regenerats. Sind diese Werte im Vergleich zum Frischprodukt signifikant erhöht und zeigen sie einen monotonen Anstieg von Zyklus zu Zyklus, ist ebenfalls von einer unvollständigen Regeneration auszugehen. Das Regenerat zeichnet sich dadurch aus, dass es auch nach wiederholter Regeneration, vorzugsweise nach 5maliger, insbesondere nach 10maliger, Regeneration einen Filterwiderstand und/oder einen Waschwiderstand von 1-10 x10¹² mPa s/m², vorzugsweise 2-8 x10¹² mPa s/m², insbesondere 2-7 x10¹² mPa s/m², aufweist. Damit wird ein sehr hoher Regenerationsgrad im Vergleich zu anderen mittels konventioneller Verfahren aus dem Stand der Technik erzielbaren Widerständen erzielt, der den Qualitäten des neuen Filterhilfsmittels annähernd entspricht. Ein derartiger Regenerationsgrad ermöglicht eine häufige Wiederverwertbarkeit und damit einen sehr wirtschaftlichen und umwelt- und ressourcenschonenden Einsatz des Filterhilfsmittels. Unter Regenerat wird das gemäss den Bedingungen wie in Beispiel 1 hinsichtlich der Hefezellenzahl, Voranschwemmung, Filtration und Regeneration mindestens einmal zur Filtration und einer anschliessenden Regeneration eingesetzte anorganische, natürliche oder halbsynthetische Filterhilfsmittel verstanden.

Das Regenerat zeichnet sich weiterhin dadurch aus, dass es nach mindestens einem, vorzugsweise 3, insbesondere 5, Filtrations-Regenerations-Zyklen eine trübungsnormierte Druckdifferenz während einer dreistündigen Filtration aufweist, die im Bereich des neuen Materials liegt und zwischen 0,02-0,6 bar/h, vorzugsweise 0,02-0,5 bar/h, insbesondere 0,02-0,4 bar/h liegt. Die Berechnung des trübungsnormierten Drucks erfolgt dabei durch Division des gemessenen Drucks mit dem Quotienten aus der tatsächlichen Unfiltrattrübung und einer Standardtrübung von 30 EBC (25°-EBC).
Damit verfügt das Regenerat über die annähernd gleichen Eigenschaften wie das neue Filterhilfsmittel vor der ersten Regeneration. Dies hat den Vorteil, dass niedrige Druckanstiegsraten während der Filtration erzielt werden und lange Filterstandzeiten möglich sind.
Das Regenerat wird mittels des beschriebenen erfindungsgemäßen Verfahrens hergestellt.
Ferner bietet eine eingehende mikroskopische Untersuchung des Regenerats eine gute Möglichkeit, um den Regenerationserfolg zu beurteilen.
Die unabhängigen und abhängigen Patentansprüche werden hiermit durch Bezugnahme zum Gegenstand der Beschreibung gemacht.
Weitere Merkmale der Erfindung ergeben sich aus der nachfolgenden Beschreibung besonderer Ausführungsformen, Figuren und Beispielen. Hierbei können die Merkmale der Erfindung einzeln oder in Kombination verwirklicht sein. Die Beispiele dienen zur Erläuterung und zum besseren Verständnis der Erfindung und sind in keiner Weise einschränkend zu verstehen.

### Figurenbeschreibung

Figur 1 zeigt die Trübungsnormierte Druckdifferenz als Funktion der Filtrationszeit (Normierung auf 30 EBC (25°)) aus Beispiel 1 mit den Zyklusnummern: -1, □-2, ▲-3, Δ-4, ○-5, ●-6
Figur 2 zeigt die Filterwiderstände (grau) und Waschwiderstände (schraffiert) als Funktion der Anzahl der Regenerationen der Filterhilfsmittel aus Beispiel 1
Figur 3 zeigt eine Mikroskopaufnahme des Filterhilfsmittels Kieselgur nach der 1. Filtration aus Beispiel 1
Figur 4 zeigt eine Mikroskopaufnahme des Filterhilfsmittels Kieselgur nach der 1. Regeneration aus Beispiel 1
Figur 5 zeigt eine Mikroskopaufnahme des Filterhilfsmittels Kieselgur nach der 2. Regeneration aus Beispiel 1
Figur 6 zeigt eine Mikroskopaufnahme des Filterhilfsmittels Kieselgur nach der 3. Regeneration aus Beispiel 1
Figur 7 zeigt eine Mikroskopaufnahme des Filterhilfsmittels Kieselgur nach der 4. Regeneration aus Beispiel 1
Figur 8 zeigt eine Mikroskopaufnahme des Filterhilfsmittels Kieselgur nach der 5. Regeneration aus Beispiel 1
Figur 9 zeigt eine Mikroskopaufnahme des Filterhilfsmittels Kieselgur nach der 6. Regeneration aus Beispiel 1
Figur 10 zeigt eine Mikroskopaufnahme des Filterhilfsmittels Perlit nach der Filtration aus Beispiel 2
Figur 11 zeigt eine Mikroskopaufnahme des Filterhilfsmittels Perlit nach der Regeneration aus Beispiel 2
Figur 12 zeigt eine Mikroskopaufnahme des Filterhilfsmittels Zellulose nach der Filtration aus Beispiel 2
Figur 13 zeigt eine Mikroskopaufnahme des Filterhilfsmittels Zellulose nach der Regeneration aus Beispiel 2
Figur 14 zeigt die Waschwiderstände von Filterhilfsmittel Perlit (1-frisch, 2-nach Regeneration) und von Zellulose (3-frisch, 4-nach Regeneration) aus Beispiel 2
Figur 15 zeigt eine Mikroskopaufnahme des Filterhilfsmittels Kieselgur nach der Filtration aus Beispiel 3
Figur 16 zeigt eine Mikroskopaufnahme des Filterhilfsmittels Kieselgur nach der Regeneration aus Beispiel 3
Figur 17 zeigt die Trübungsnormierte Druckdifferenz als Funktion der Filtrationszeit ( Normierung auf 30 EBC (25°)) aus Beispiel 4 mit den Zyklusnummern: □-1, ■-2, Δ-3, ▲-4, ●-5, ○-6
Figur 18 zeigt die Filterwiderstände (grau) und Waschwiderstände (schraffiert) als Funktion der Anzahl der Regenerationen der Filterhilfsmittel aus Beispiel 4
Figur 19 zeigt eine Mikroskopaufnahme des Filterhilfsmittels Kieselgur + Zellulose nach der 1. Filtration aus Beispiel 4
Figur 20 zeigt eine Mikroskopaufname des Filterhilfsmittels Kieselgur + Zellulose nach der 1. Regeneration aus Beispiel 1
Figur 21 zeigt eine Mikroskopaufnahme des Filterhilfsmittels Kieselgur + Zellulose nach der 2. Regeneration aus Beispiel 4
Figur 22 zeigt eine Mikroskopaufnahme des Filterhilfsmittels Kieselgur + Zellulose nach der 3. Regeneration aus Beispiel 4
Figur 23 zeigt eine Mikroskopaufnahme des Filterhilfsmittels Kieselgur + Zellulose nach der 4. Regeneration aus Beispiel 4
Figur 24 zeigt eine Mikroskopaufnahme des Filterhilfsmittels Kieselgur + Zellulose nach der 5. Regeneration aus Beispiel 4
Figur 25 zeigt eine Mikroskopaufnahme des Filterhilfsmittels Kieselgur + Zellulose nach der 6. Regeneration aus Beispiel 4

### Beispiele

### Beispiel1

### Kieselgurfiltration mittels Kerzenfilter

Die Filtration erfolgte mit Trübbier (Pils) unter Verwendung eines Kerzenfilters (Spaltweite der Filterkerze 70 µm, Filterfläche 0,032 m²). Als Filterhilfsmittel wurde Kieselgur unterschiedlicher Feinheit verwendet (Bezeichnung DIC, CBR3 und CBL, Fa. Pall GmbH SeitzSchenk).

### Voranschwemmung:

Es wurde mit einer Voranschwemmung von 1500 g/m² gearbeitet (25 % DIC, 75 % CBR3), die mit einem Volumenstrom von 30l/h anfiltriert wurde.

### Filtration:

Die Bierfiltration erfolgte mit einem Volumenstrom von 15 l/h und unter Zugabe von 100 g/hL Kieselgur (25 % DIC, 50 % CBR3, 25 % CBL) für jeweils ca. 3h. Das Unfiltrat wies eine Hefezellenzahl von 2-2,4-10⁶ auf.

### Regeneration:

Nach Beendigung der Bierfiltration erfolgte eine Heißwasserbehandlung durch Spülung des noch auf dem Filter befindlichen intakten Filterkuchens mit Trinkwasser (85 °C) während eines Zeitraums von 15 min. bei einem Durchsatz von 30 l/h. Anschließend erfolgte eine Spülung des Filterkuchens mit wässriger 2 Gew-%iger NaOH (85 °C) während eines Zeitraums von 15 min. unter Verwerfen der Spülflüssigkeit, anschließend 45 min. lang in Kreislauffahrweise, in beiden Fällen bei einem Durchsatz von 15 l/h. Danach erfolgte eine Spülung mit 30 l/h Trinkwasser (5-10 °C) zur Entfernung des Restvolumens der NaOH-Lösung in der Anlage und Abkühlung während 20 min. Im Anschluss daran erfolgte eine Enzymbehandlung, wobei vor der Behandlung der Filterkuchen ausgebaut (Aufschlämmen und verdünnen auf eine ca. 10 Gew-%ige Suspension), in einen außerhalb des Filters befindlichen Rührkessel überführt und mit Zitronensäure eine Einstellung auf pH 4 vorgenommen wurde. Dort erfolgte eine Behandlung mit einer wässrigen Lösung einer β-1,3-Glucanase (Trenolin Filtro DF®, Fa. Erbslöh) bei pH 4 und 50 °C für 120 min. Die Enzymmenge betrug 11 U/(EBC·hL). Nach Beendigung der Enzymbehandlung wurde in der Suspension durch Zugabe von NaOH (10 %ig) und Natrium-Dodecylsulfat (SDS, 10 %ig) eine NaOH-Konzentration von 1 Gew-% und eine SDS-Konzentration von 0,5 Gew-% eingestellt und das System im Rührkessel bei 85 °C für 15 min. behandelt. Im Anschluss wurde der Feststoff in Kreislauffahrweise bei 30 l/h erneut auf der Filterkerze angeschwemmt und ebenfalls bei 30 l/h zunächst für 15 min. mit Trinkwasser (85 °C) und anschließend für ca. 15 min. mit Trinkwasser (5-10 °C) gespült. Nach dieser Prozedur wurde das Regenerat aus der Filteranlage entfernt und für den folgenden Filtrations-Regenerations-Zyklus in einem Gefäß zwischengelagert.

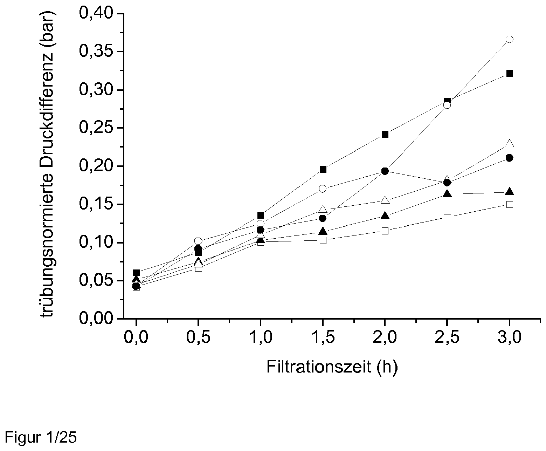

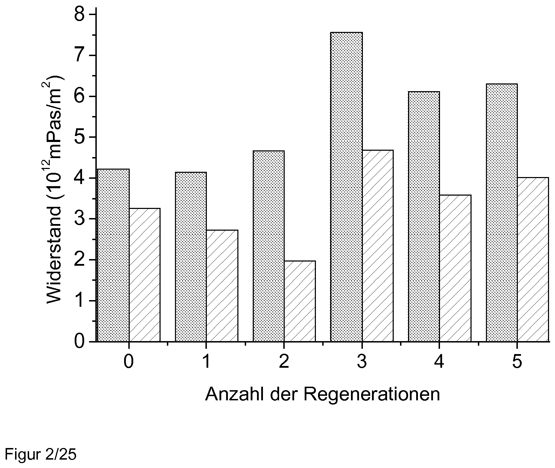

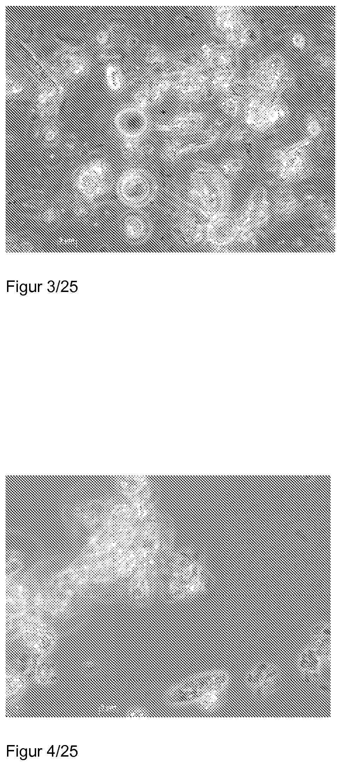

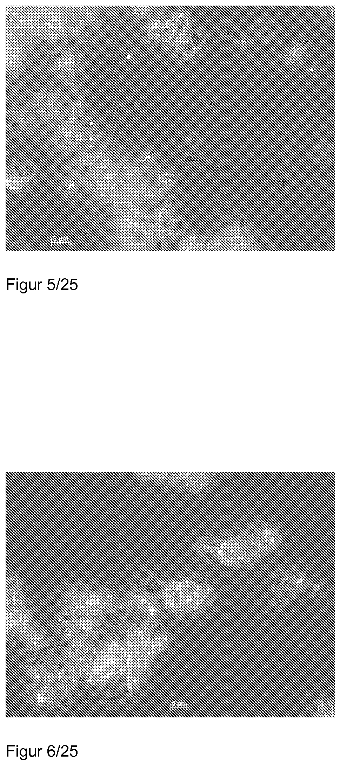

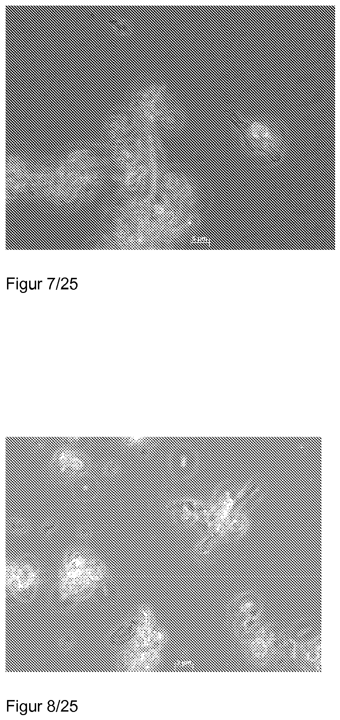

Die Beurteilung der Regeneration erfolgte einerseits mikroskopisch und andererseits durch Bestimmung des Filter- und Waschwiderstands (VDI-Richtlinie 2762, 20 °C). Die Bestimmung des Waschwiderstand erfolgte unter Durchströmung eines Regenerat-Filterkuchens von ca. 5-20 mm Dicke mit 50-100 g Wasser (20 °C). Ein weiteres Beurteilungskriterium war der zeitliche Verlauf des Druckanstiegs bei der folgenden Bierfiltration. Die Druckanstiegskurven zu Beispiel 1 sind Fig. 1 zu entnehmen. Es wurden 6 Filtrationen mit jeweils dazwischenliegenden Regenerationen durchgeführt. Die Regenerate zeichnen sich durch gleichwertige bzw. leicht geringere Druckanstiegsraten im Vergleich zum Frischprodukt aus, was eine hohe Regeneratqualität belegt. Die Filter- und Waschwiderstände der Regenerate (Fig. 2) liegen unterhalb von 1.10¹³ mPas/m² und weisen lediglich versuchsbedingte Schwankungen, jedoch keinen kontinuierlichen Anstieg von Zyklus zu Zyklus auf, was ebenfalls eine erfolgreiche Regeneration belegt. Gleiches gilt für die mikroskopische Beurteilung der Regenerate (Fig. 3-9).

Fig. 3-9 zeigen mikroskopische Aufnahmen von Kieselgur nach erfolgter Filtration und anschließender Regeneration von mehreren Zyklen. Es zeigen sich nach keiner der 6 dargestellten Regenerationen ganze Hefezellen oder auch nur Teile davon. Somit ist die Lyse jeweils vollständig erfolgt und die Qualität der Regenerationen als sehr gut zu bewerten.

### Beispiel 2

Filtration unter Verwendung von Perlit oder reiner Zellulose unter Verwendung einer Labordrucknutsche

Im Folgenden werden Regenerationsversuche, jeweils unter Verwendung von Perlit oder Zellulose beschrieben. Die Materialien wurde, jeweils unter Verwendung im Hinblick auf ihre Regenerierbarkeit nach erfolgter Bierfiltration untersucht. Bei dem verwendeten Perlit handelt es sich um die Type Harbolite (Fa. Lehmann & Voss; Mischung aus 50 Gew. % Harbolite 300 und 50 Gew. % Harbolite 635). Die verwendete Zellulose stammt von der Fa. J. Rettenmaier & Söhne (Typ Arbocel BE 600/10). Die Auswahl der Typen erfolgte entsprechend der Rückhaltefähigkeit in Bezug auf Biertrübstoffe.

Die folgende Beschreibung gilt sowohl für Versuche mit Perlit als auch mit Zellulose. Zunächst wurde mit Biertrübstoffen beladenes Filterhilfsmittel unter Verwendung einer Drucknutsche (20 cm² Filterfläche) und eines Vorlagebehälters (10 L, gerührt) hergestellt. Hierbei wurde zuerst eine Voranschwemmschicht des Filterhilfsmittels auf dem Filtermedium angeschwemmt (2000 g/m²). Anschließend wurden Filterhilfsmittel und unfiltriertes Bier (Pils, 8 L) im Vorlagebehälter miteinander vermischt (Konzentration des Filterhilfsmittels: 100 g/hL) und unter Rühren über die mit der Voranschwemmschicht versehene Nutsche filtriert. Hierbei wurde die Druckdifferenz derart nachgeführt (0,1-3,5 bar), dass ein etwa konstanter Filtratvolumenstrom resultierte. Das Filtrat war annähernd klar. Nach Abschluss der Filtration wurde das Material wie folgt regeneriert: Der beladene Filterkuchen wurde aus der Nutsche ausgebaut und mit entmineralisiertem Wasser (EMW) verdünnt, so dass eine Suspension mit ca. 10 % Feststoffgehalt vorlag. Diese Suspension wurde durch Zugabe von 50 %iger wässriger NaOH auf eine Endkonzentration von 1 % NaOH eingestellt und für 60 min. bei 85 °C inkubiert. Die Suspension wurde anschließend filtriert (Drucknutsche, 20 cm² Filterfläche) und der entstandene Filterkuchen 5 Mal mit jeweils 200 ml EMW gewaschen. Danach wurde der Kuchen ausgebaut und das System anschließend mit EMW verdünnt, so dass wiederum eine ca. 10 Gew-%ige Suspension vorlag. Nach der Zugabe von 11 U/(EBC*hL) β-Glucanase (Trenolin Filtro DF ®, Fa. Erbslöh), wurde die Suspension bei pH 4 und 50 °C für 2 h inkubiert. Anschließend wurde mit SDS 10 %ig und wässriger NaOH 50 %ig eine SDS-Konzentration von 0,5 % sowie eine NaOH-Konzentration von 1 % eingestellt und das System für 15 min. bei 20-25 °C inkubiert. Im Anschluss wurde der Feststoff mit einer Labor-Drucknutsche (siehe oben) abfiltriert und 5 Mal mit je 200 ml EMW (20-25 °C) gewaschen (Durchströmungswäsche). Unregenerat und Regenerat wurden mikroskopisch beurteilt.

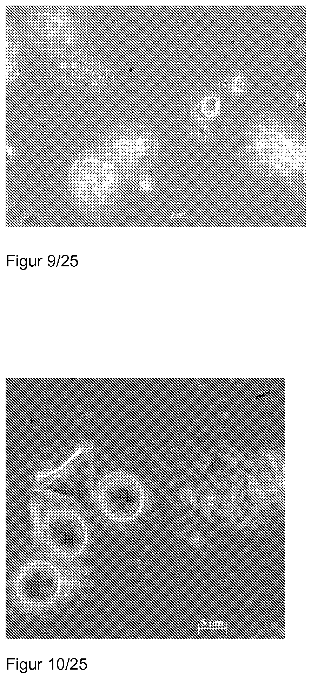

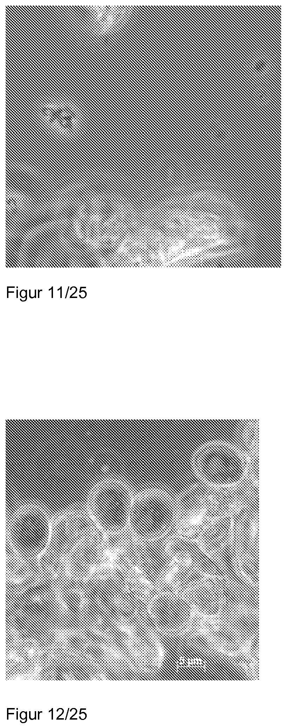

Für die Regenerierung von Perlit (Fig. 10 und 11) zeigen die mikroskopischen Aufnahmen, dass die Hefezellen und weitere Schmutzpartikel erfolgreich entfernt wurden.

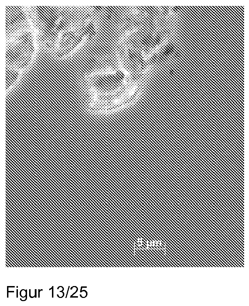

Für die Regenerierung von Zellulose (Fig. 12 und 13) zeigen die mikroskopischen Aufnahmen ebenfalls, dass die Hefezellen und weitere Schmutzpartikel erfolgreich entfernt wurden.

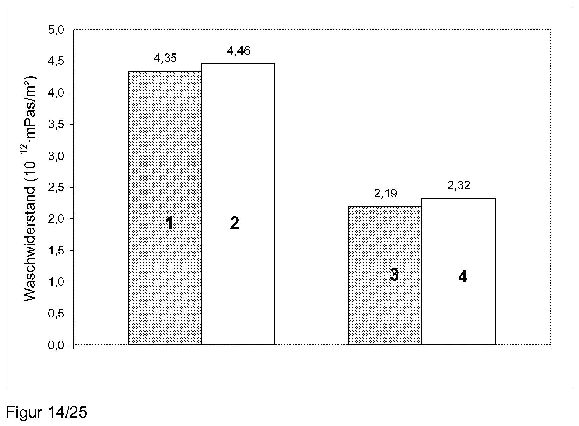

Im Anschluss wurden der Filter- und der Waschwiderstand der jeweiligen Regenerate gemäß VDI-Richtlinie 2762 gemessen und mit denjenigen des unbeladenen Filterhilfsmittels verglichen (Fig. 14). Die Ergebnisse zeigen, dass die jeweiligen Waschwiderstände der Ausgangsproben und der Regenerate im Rahmen der Messgenauigkeit identisch sind.

Somit kann basierend auf den Filtrationseigenschaften von einer erfolgreichen Regeneration sowohl von Perlit als auch von Zellulose ausgegangen werden.

### Beispiel 3

### Kieselgurfiltration mittels einer Labordrucknutsche

### Beispiel 3 ist analog Bsp. 2 mit Kieselgur unter der im Beispiel 1 angegebenen

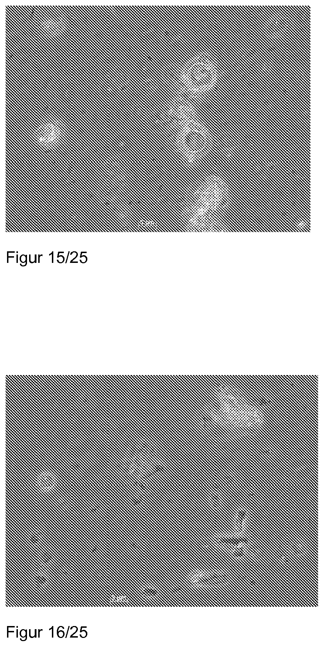

Spezifikation durchgeführt worden. Enzym: Cellufood AL 140®, Fa. Bioprakt GmbH, Berlin. Die Enzymmenge betrug 11 U/(EBC·hL). Nach erfolgter Regeneration wurden Filterwiderstände ungeladener mit denen regenerierter Kieselgur verglichen:
Filterwiderstand frisch: 9,48 E12 mPas/m²
Filterwiderstand regeneriert: 8,62 E12 mPas/m²
Zusammen mit mikroskopischen Analysen zeigt dies den Erfolg der Regeneration (Fig. 15 und 16.)

### Beispiel 4

### Filtration unter Verwendung einer Kieselgur-Zellulose-Mischung mittels eines Kerzenfilters

Die Versuchsdurchführung erfolgte analog zu Beispiel 1.

Sowohl für die Voranschwemmung (1500 g/m²) als auch für die Dosage (100 g/hL) wurde ein Gemisch aus 20,0 Gew-% Zellulose (Arbocel BE600/10, Fa. J. Rettenmaier & Söhne) und 80,0 Gew-% Kieselgur eingesetzt. Der Kieselguranteil bestand hierbei zu 25 % aus dem Typ DIC, 62, 5% aus dem Typ CBR3 und zu 12,5 % aus dem Typ CBL (Beispiel 1).

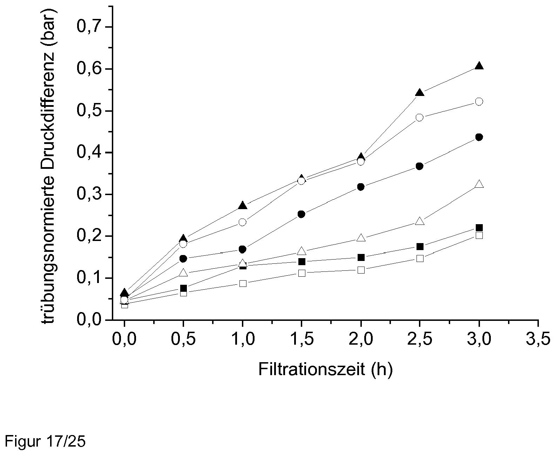

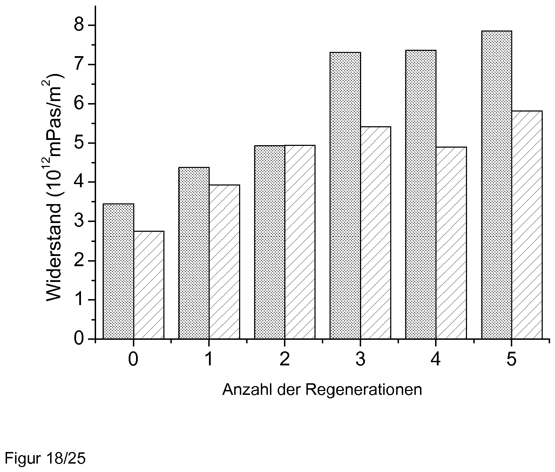

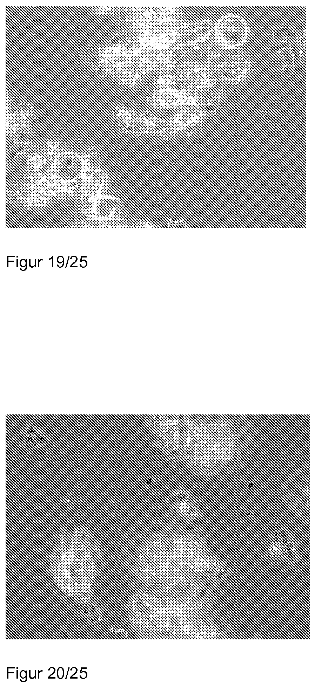

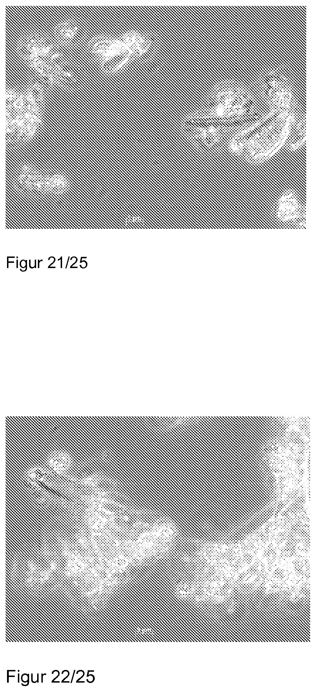

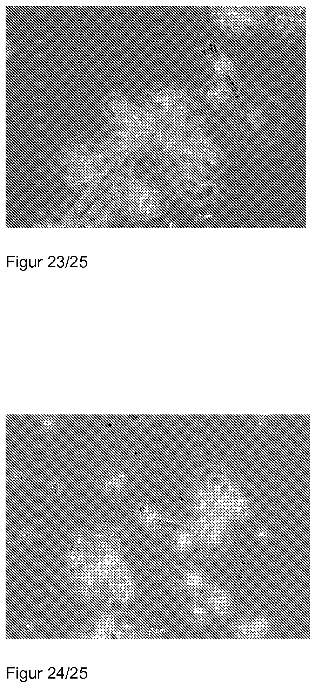

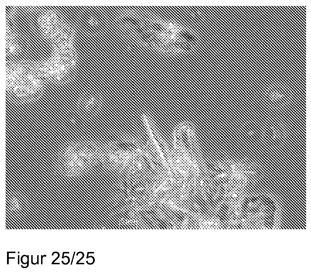

Die Druckanstiegskurven zu Beispiel 4 sind in Fig 17 dargestellt. Es wurden 6 Filtrationen mit jeweils dazwischenliegenden Regenerationen durchgeführt. Die jeweils zugegebene Menge an Frischprodukt (gleiches Mischungsverhältnis wie zu Beginn) betrug ca. 20 %. Die trübungsnormierten Druckanstiegsraten der Regenerate sind im Vergleich zum Frischprodukt erhöht, liegen jedoch mit maximal 0,2 bar/h in einer akzeptablen Höhe. Ferner liegt kein kontinuierlicher Anstieg der Druckanstiegsrate von Zyklus zu Zyklus vor; der trübungsnormierte Druckanstieg bei der 5. und 6. Filtration fiel geringer aus als bei der 4. Filtration. Die Filter- und Waschwiderstände der Regenerate (Fig 18) liegen unterhalb von 1.10¹³ mPas/m². Sie weisen zwar einen Anstieg von Zyklus zu Zyklus auf, dieser ist jedoch degressiv und nicht linear oder exponentiell, wie dies bei einem unzureichenden Regenerationsverfahren der Fall ist. Die erfolgreiche Regeneration wird auch durch die mikroskopische Untersuchung der Regenerate belegt (Fig 19-25).

Fig. 19-25 zeigen mikroskopische Aufnahmen von Kieselgur/Cellulose nach 1 bis 6 Zyklen einer Filtration und anschließender Regeneration.

## Patentansprüche

1. Verfahren zur Regenerierung von anorganischen, natürlichen und halbsynthetischen Filterhilfsmitteln, **dadurch gekennzeichnet ist, dass** man:
a) das Filterhilfsmittel einer ersten Behandlung mit wässriger Lauge unterwirft,
b) eine Behandlung mit Enzymen vornimmt,
c) eine Behandlung mit einem Tensid durchführt, und
d) eine zweite Behandlung mit wässriger Lauge durchführt,
wobei die zweite Behandlung mit wässriger Lauge (Schritt d) und die Tensidbehandlung (Schritt c) gleichzeitig erfolgen.

2. Verfahren nach Anspruch 1, **dadurch gekennzeichnet, dass** als Filterhilfsmittel mindestens eines ausgewählt aus der Gruppe bestehend aus Kieselgur, Perlit, Aluminiumoxid, Glas, Pflanzengranulate, Holzfasern und Zellulose verwendet werden.

3. Verfahren nach Anspruch 1 oder 2, **dadurch gekennzeichnet, dass** als wässrige Lauge Natronlauge eingesetzt wird.

4. Verfahren nach einem der Ansprüche 1 bis 3, **dadurch gekennzeichnet, dass** als Enzyme Hefezellen lysierende Enzyme eingesetzt werden.

5. Verfahren nach einem der Ansprüche 1 bis 4, **dadurch gekennzeichnet, dass** als Enzyme Glucanasen eingesetzt werden.

6. Verfahren nach einem der Ansprüche 1 bis 5 , **dadurch gekennzeichnet, dass** als Tenside anionische oder nichtionische Tenside eingesetzt werden.

7. Verfahren nach einem der Ansprüche 1 bis 6, **dadurch gekennzeichnet, dass** als Tensid Natriumdodecylsulfat verwendet wird.

8. Verfahren nach einem der Ansprüche 1 bis 6, **dadurch gekennzeichnet, dass** als Tenside Fettalkoholethoxylate verwendet werden.

9. Verfahren nach einem der Ansprüche 1 bis 8, **dadurch gekennzeichnet, dass** die erste Behandlung mit wässriger Lauge an einem Filterkuchen erfolgt.

10. Verfahren nach einem der Ansprüche 1 bis 8 , **dadurch gekennzeichnet, dass** die erste Behandlung mit wässriger Lauge an einer wässrigen Suspension oder Aufschlämmung des Filterhilfsmittels erfolgt.

11. Verfahren nach einem der Ansprüche 1 bis 10, **dadurch gekennzeichnet, dass** die Enzymbehandlung an einer wässrigen Aufschlämmung oder Suspension des Filterhilfsmittels erfolgt.

12. Verfahren nach einem der Ansprüche 1 bis 11, **dadurch gekennzeichnet, dass** die Tensidbehandlung an einer wässrigen Suspension oder Aufschlämmung des Filterhilfsmittels erfolgt.

13. Verfahren nach einem der Ansprüche 1 bis 11, **dadurch gekennzeichnet, dass** die Tensidbehandlung an einem Filterkuchen erfolgt.

14. Verfahren nach einem der Ansprüche 1 bis 13, **dadurch gekennzeichnet, dass** die zweite Behandlung mit wässriger Lauge an einer wässrigen Suspension oder Aufschlämmung des Filterhilfsmittels erfolgt.

15. Verfahren nach einem der Ansprüche 1 bis 13, **dadurch gekennzeichnet, dass** die zweite Behandlung mit wässriger Lauge an einem Filterkuchen erfolgt.

16. Verfahren nach einem der Ansprüche 1 bis 15, **dadurch gekennzeichnet, dass** zwischen den einzelnen Schritten unabhängig von einander ein Waschschritt, vorzugsweise mit Wasser, durchgeführt wird.

## Claims

1. A method of regenerating inorganic, natural and semisynthetic filter aids which comprises:
a) subjecting the filter aid to a first treatment with aqueous alkaline solution,
b) performing a treatment with enzymes,
c) carrying out a treatment with a surfactant, and
d) carrying out a second treatment with aqueous alkaline solution,
wherein the second treatment with aqueous alkaline solution (step d) and the surfactant treatment (step c) proceed simultaneously.

2. The method according to claim 1, wherein the filter aid, is at least one selected from the group consisting of kieselguhr, perlite, aluminum oxide, glass, plant granules, wood fibers and cellulose.

3. Method according to claim 1 or 2, wherein the aqueous alkaline solution is sodium hydroxide solution.

4. The method according to one of claims 1 to 3, wherein the enzymes are yeast-cell-lysing enzymes.

5. The method according to one of claims 1 to 4, wherein the enzymes are glucanases.

6. The method according to one of claims 1 to 5, wherein the surfactant is an anionic or nonionic surfactant.

7. The method according to one of claims 1 to 6, wherein the surfactant is sodium dodecyl sulfate.

8. The method according to one of claims 1 to 6, wherein the surfactant is a fatty alcohol ethoxylate.

9. The method according to one of claims 1 to 8, wherein the first treatment with aqueous alkaline solution proceeds on a filter cake.

10. The method according to one of claims 1 to 8, wherein the first treatment with aqueous alkaline solution proceeds on an aqueous suspension or slurry of the filter aid.

11. The method according to one of claims 1 to 10, wherein the enzyme treatment proceeds on an aqueous slurry or suspension of the filter aid.

12. The method according to one of claims 1 to 11, wherein the surfactant treatment proceeds on an aqueous suspension or slurry of the filter aid.

13. The method according to one of claims 1 to 11, wherein the surfactant treatment proceeds on a filter cake.

14. The method according to one of claims 1 to 13, wherein the second treatment with aqueous alkaline solution proceeds on an aqueous suspension or slurry of the filter aid.

15. The method according to one of claims 1 to 13, wherein the second treatment with aqueous alkaline solution proceeds on a filter cake.

16. The method according to one of claims 1 to 15, wherein between the individual steps, independently of one another, a wash step is carried out, preferably with water.

## Revendications

1. Procédé pour la régénération d'adjuvants de filtration inorganiques, naturels et semi-synthétiques, **caractérisé en ce que** :
a) on soumet l'adjuvant de filtration à un premier traitement avec une lessive aqueuse,
b) on effectue un traitement avec des enzymes,
c) on effectue un traitement avec un tensioactif et
d) on effectue un deuxième traitement avec une lessive aqueuse,
le deuxième traitement avec la lessive aqueuse (étape d) et le traitement avec un tensioactif (étape c) étant réalisées simultanément.

2. Procédé selon la revendication 1, **caractérisé en ce qu'**on utilise comme adjuvant de filtration au moins un adjuvant choisi dans le groupe constitué par le kieselgur, la perlite, l'oxyde d'aluminium, le verre, les granulats végétaux, les fibres de bois et la cellulose.

3. Procédé selon la revendication 1 ou 2, **caractérisé en ce qu'**on utilise, comme lessive aqueuse, de la lessive de soude caustique.

4. Procédé selon l'une quelconque des revendications 1 à 3, **caractérisé en ce qu'**on utilise, comme enzymes des enzymes, lysant les cellules de levure.

5. Procédé selon l'une quelconque des revendications 1 à 4, **caractérisé en ce qu'**on utilise, comme enzymes, des glucanases.

6. Procédé selon l'une quelconque des revendications 1 à 5, **caractérisé en ce qu'**on utilise, comme agents tensioactifs, des agents tensioactifs anioniques ou non ioniques.

7. Procédé selon l'une quelconque des revendications 1 à 6, **caractérisé en ce qu'**on utilise, comme agent tensioactif, du dodécylsulfate de sodium.

8. Procédé selon l'une quelconque des revendications 1 à 6, **caractérisé en ce qu'**on utilise, comme agents tensioactifs, des éthoxylates d'alcools gras.

9. Procédé selon l'une quelconque des revendications 1 à 8, **caractérisé en ce que** le premier traitement est effectué à l'aide d'une lessive aqueuse sur un gâteau de filtre.

10. Procédé selon l'une quelconque des revendications 1 à 8, **caractérisé en ce que** le premier traitement par une lessive aqueuse a lieu sur une suspension aqueuse de l'adjuvant de filtration.

11. Procédé selon l'une quelconque des revendications 1 à 10, **caractérisé en ce que** le traitement enzymatique a lieu sur une suspension aqueuse de l'adjuvant de filtration.

12. Procédé selon l'une quelconque des revendications 1 à 11, **caractérisé en ce que** le traitement par un tensioactif a lieu sur une suspension aqueuse de l'adjuvant de filtration.

13. Procédé selon l'une quelconque des revendications 1 à 11, **caractérisé en ce que** le traitement par un tensioactif a lieu sur un gâteau de filtre.

14. Procédé selon l'une quelconque des revendications 1 à 13, **caractérisé en ce que** le deuxième traitement par une lessive aqueuse a lieu sur une suspension aqueuse de l'adjuvant de filtration.

15. Procédé selon l'une quelconque des revendications 1 à 13, **caractérisé en ce que** le deuxième traitement est effectué à l'aide d'une lessive aqueuse sur un gâteau de filtre.

16. Procédé selon l'une quelconque des revendications 1 à 15, **caractérisé en ce qu'**une étape de lavage, de préférence à l'eau, est réalisée entre les différentes étapes, indépendamment les unes des autres.
